# EUROPEAN PATENT SPECIFICATION

(11) **EP 0 581 404 B1**
(45) Date of publication and mention of the grant of the patent: **04.12.1996**
(21) Application number: 93301162.9
(22) Date of filing: 17.02.1993
(51) Int. Cl.: B29D 30/28, B29C 65/00

(54) **A method and apparatus for fabricating a tyre**
Verfahren und Vorrichtung zur Reifenherstellung
Procédé et dispositif de fabrication de pneus

(30) Priority: 19.02.1992 JP 16569/92; 10.12.1992 JP 353052/92
(43) Date of publication of application: 02.02.1994
(73) Proprietor: Sumitomo Rubber Industries Ltd., Kobe-shi, Hyogo-ken (JP)
(72) Inventor: Imai, Misashi, Aza Miyakobashiyama, Fukushima-ken (JP); Miyanaga, Yoshinobu, Shirakawa-shi, Fukushima-ken (JP); Masuda, Kenichi, Shirakawa-shi, Fukushima-ken (JP)
(74) Representative: Stewart, Charles Geoffrey

(56) References cited:
- GB-A- 2 033 315
- GB-A- 2 212 590
- NL-A- 9 001 467
- US-A- 2 604 420
- US-A- 3 305 427
- US-A- 4 096 008

## Description

This invention relates to a method and apparatus for fabricating a tyre by pressing a breaker and a tread radially inwards against an outer circumferential surface of an annular carcass to adhere these components to one another.

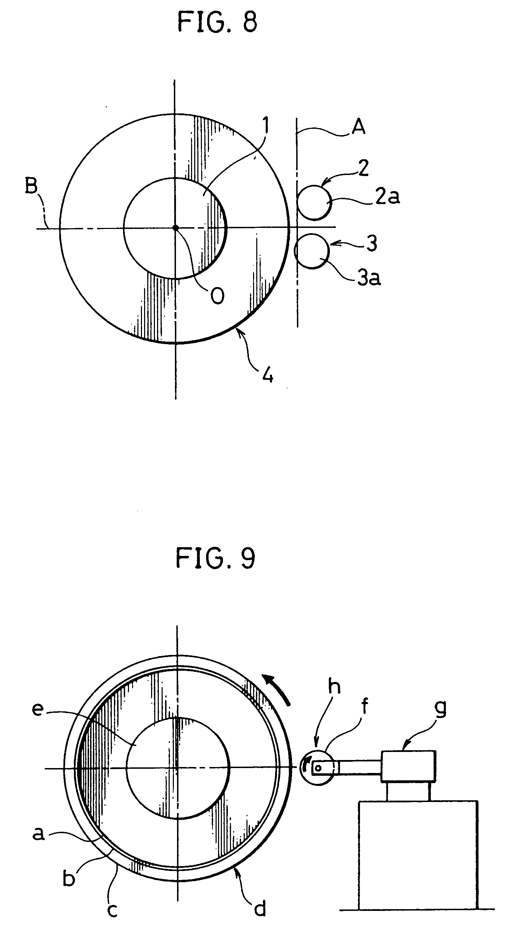

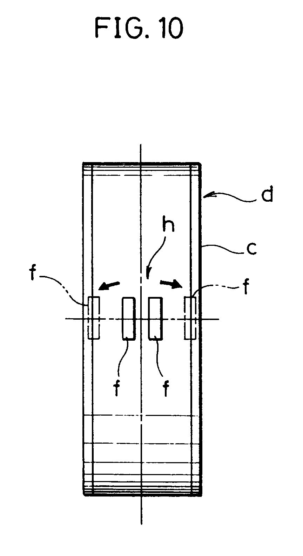

Generally a radial tyre is fabricated by a stitching process to compressively adhere together a carcass, a breaker, and a tread. Conventionally, the stitching process has been carried out as follows. As shown in Figs. 9 and 10, a component assembly d including a carcass a, a breaker b, and a tread c is mounted on a drum e. The component assembly d is inflated with air and then the components are rotated together on the drum e. At the same time, a stitching roller member h comprising a pair of rotatable rollers f is pressed against the outer circumferential surface of the tread c by a cylinder g. The carcass a, the breaker b, and the tread c are progressively stitched by moving apart the two rollers f from the centre of the outer circumferential surface of the tread c to the axially outer edges thereof. In other words, the rollers f are moved away from each other to the positions f as indicated by the phantom lines in Fig. 10.

Incidentally, the degree of adherence of the components of the tyre after the stitching operation depends upon the magnitude of the pressing force which the stitching roller member h applies to the outer circumferential surface of the tread c, the pressing time during which this pressing force is applied, and the like. Further, centrifugal force acts due to the rotation of the component assembly d during this adhering operation. Accordingly, it is necessary to set the pressure of the cylinder g, the internal pressure and the rotating speed of the component assembly d, the pressing time, and the like according to the shape, thickness, and compounds of the tread c in consideration of the centrifugal force in order to obtain a satisfactory adhering state.

Specifically, in order to carry out an effective stitching operation, it is generally preferable to increase the pressing force of the stitch roller member h by increasing the pressure of the cylinder g and the internal pressure of the component assembly d. However, if the pressing force is set at a too high value, then the portion of the component assembly d in contact with the stitch roller member h becomes liable to deform. This may cause an inferior rubber flow at the time of vulcanisation and poor appearance due to flaws. Further, any excessive pressing force causes a partial slip at the turned-up portions of the carcass ply, causing variations in the circumferential cord path (the length of the path extending from one turned-up portion to the other along the carcass ply. This may damage the dynamic uniformity of the tyre.

At the same time, it is desirable to attain a sufficiently long pressing time of applying the pressing force in order to carry out the stitching operation properly. The longer the pressing time, the longer the cycle time required to fabricate one tyre. This stands as a hindrance to improvement in productivity.

An apparatus having the conventional pair of rotatable rollers supplemented by an additional pair of consolidating discs is known from US-A-2604420. However in this known apparatus the rollers and consolidating discs are disposed in a staggered relationship so that the consolidating discs always travel inside the path of the rollers.

In view of the problems existing in the prior art, it is an object of the invention to provide a method and apparatus for fabricating a tyre which are capable of carrying out a satisfactory adhering operation within a short period of time without applying excessive pressing force to the component assembly and of improving the quality and productivity of the tyre accordingly.

According to one aspect of the present invention a tyre fabricating method for an annular carcass, a breaker and a tread over the carcass, on an outer circumferential surface of a drum, comprising pressing the carcass, breaker, and tread radially inwards of the drum to thereby adhere them one to another, by pressing first and second stitch roller members each of which comprises left and right spaced apart roller elements, arranged parallel to a rotatable shaft of the drum, against the outer circumferential surface of the tread at positions spaced apart relatively to each other in the circumferential direction of the tread while rotating the carcass, breaker, and tread together on the drum and, then at the same time, the roller elements are moved away from each other from a centre portion of the outer circumferential surface of the tread to opposite edges thereof so as to widen the spacing between the roller elements, characterised in that the left roller elements of the first and second roller member are arranged in a circumferential line on a left side of the centre portion of the tread and the right roller elements of the first and second roller member are arranged in a circumferential line on a right side of the centre portion of the tread.

Another aspect provides a tyre fabricating apparatus for an annular carcass, a breaker and a tread over the carcass, to adhere the same to one another, the apparatus comprising a drum, drive means for rotating the drum a first stitch roller member including a pair of roller elements arranged spaced apart parallel to a rotatable shaft of the drum, a second stitch roller member including a pair of roller elements arranged spaced apart parallel to the rotatable shaft of the drum at a position shifted from the first stitch roller member in the circumferential direction of the tread, pressing means for rotatably supporting and pressing the first and second stitch roller members against the outer circumferential surface of the tread, and widening means for moving the roller elements of each stitch roller member respectively away from each other from a centre portion of the outer circumferential surface of the tread to opposite edges thereof so as to widen the spacing between the roller elements, characterised in that one roller element of each of the first and second roller members is arranged in a circumferential line on one side of the centre portion of the tread and the other roller element of each of the first and second roller members is arranged in a circumferential line on the other side of the centre portion of the tread.

With the tyre fabricating apparatus thus constructed, both the first and second stitch roller members are pressed against the outer circumferential surface of the tread of the component assembly during rotation. Accordingly, the total pressing force applied to the outer circumferential surface of the tread is the sum of the pressing forces given from the first and second stitch roller members. Thus, sufficient pressing force can be attained as a whole to carry out an improved fully satisfactory stitching operation without increasing the pressing forces used on each separate stitch roller member. This contributes to a great reduction in the production of defective products which are otherwise easily produced when the pressing forces of the respective stitch roller members are increased to thereby improve the quality of the tyre, and suppresses deformation of the component assembly due to excessive pressing force to thereby prevent an inferior rubber flow at the time of vulcanisation and improves the uniformity of the tyre. Further, the pressing time can be shortened compared to the case where a single stitch roller member is used, with the result that the cycle time for fabricating one tyre can be shortened and productivity can be improved.

It is preferable to arrange the first and second stitch roller members at positions adjacent to each other in the circumferential direction of the tread. With this arrangement, the stitching effect can be further improved. For instance, when the first stitch roller member is located at a more upstream position with respect to the rotating direction of the drum than the first stitch roller member, the stitching operation is carried out as follows. First of all, the outer circumference of the tread is pressed by the first stitch roller member once, thereby adhering the carcass, the breaker, and the tread to one another. Thereafter, the outer circumferential surface of the tread is pressed by the second stitch roller member before the first obtained adhesion is loosened by the centrifugal force generated by the rotation of the component assembly and the restoring force of the tread as a rigid body. Accordingly, a higher adhering effect can be obtained.

More specifically, the first and second stitch roller members are located at such adjacent positions that the tread is pressed by the second stitch roller member before restoration of the tread into its original form, after the tread is pressed by the first stitch roller member.

Further, if the first stitch roller member is arranged at a more upstream position with respect to the rotating direction of the drum and set at a weaker force than the second stitch roller member, deformation of the tread can be avoided since the strong pressing force is not applied abruptly to the outer circumferential surface of the tread in rotation. In other words, since the weak pressing force is first given from the first stitch roller member and the strong pressing force is then given from the second stitch roller member, the stitching operation can be carried out smoothly.

The pressing means for supporting the respective roller elements may include a support member for rotatably supporting the roller elements of the first and second stitch roller members located at the same side of the centre portion of the outer circumferential surface of the tread in the state where these roller elements are arranged side by side in the circumferential direction of the tread, and a pressing member for moving the support member and the roller elements supported by the support member integrally towards the outer circumferential surface of the tread in the inward radial direction of the tread. In addition, the support member may be coupled with the pressing member rotatable about an axis parallel to the rotatable shaft of the drum. With this arrangement, even if the pressing direction of the pressing member does not coincide precisely with the direction normal to the rotatable shaft of the drum, its directional deviation can be offset by rotation of the support member when the respective roller elements are pressed against the outer circumferential surface of the tread (i.e. by the inclination of the support member relative to the pressing member). Therefore, all the roller elements can be pressed satisfactorily against the outer circumferential surface of the tread constantly.

These and other features and advantages of the present invention will become more apparent from the following detailed description of certain embodiments, by way of example only, in conjunction with the accompanying drawings in which:
Fig. 1 is a front view showing a first tyre fabricating apparatus embodying the invention;
Fig. 2 is a side view showing the positional relationship between the outer circumferential surface of a tread and respective stitch roller members in the first tyre fabricating apparatus;
Fig. 3 is a side view showing a mechanism for widening the spacing between roller elements of each stitch roller member;
Fig. 4 is a sectional view showing the position of the stitch roller member before the spacing between the roller elements is widened;
Fig. 5 is a sectional view showing the state of the stitch roller member after the spacing between the roller elements is widened;
Fig. 6 is a front view showing a second tyre fabricating apparatus embodying the invention;
Fig. 7 is a front view showing the pressing mechanism of the second tyre fabricating apparatus;
Fig. 8 is a front view showing the positional relationship between a component assembly and respective stitch roller member in a third tyre fabricating apparatus;
Fig. 9 is a front view showing a tyre fabricating apparatus of the prior art; and
Fig. 10 is a side view showing the positional relationship between an outer circumferential surface of a tread and respective stitch roller members in the tyre fabricating apparatus of the prior art.

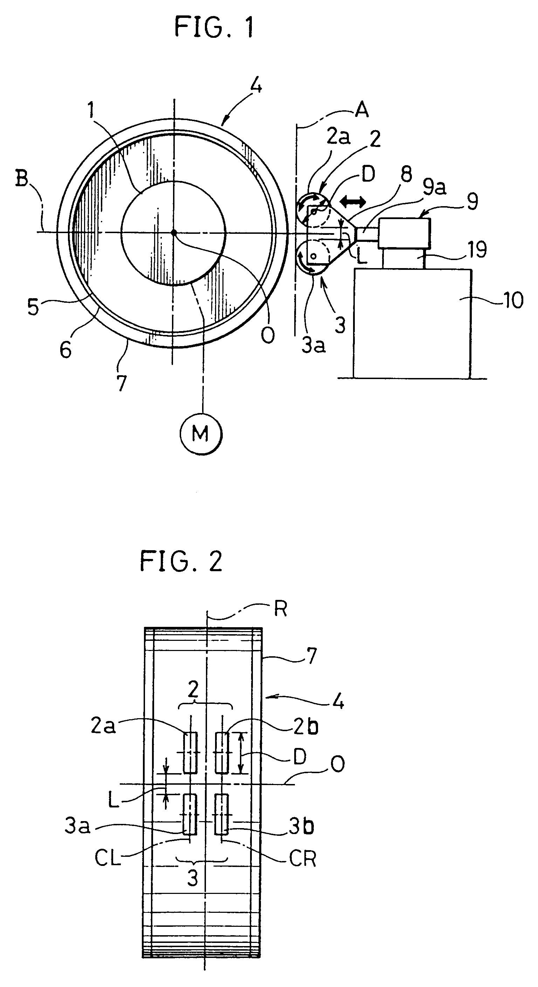

A first embodiment of the invention will be described with reference to Figs. 1 to 5.

The tyre fabricating apparatus shown in Figs. 1 and 2 is provided with a rotatable drum 1. This drum 1 is coupled with a motor (drive means) M, and is drivingly rotated by the motor M in a specified direction and at a specified speed about a shaft centre O thereof. On an outer circumferential surface of the drum 1 are mounted an annular carcass 5, a breaker 6, and a tread 7 in this order. The carcass 5, breaker 6, and tread 7 constitute a component assembly 4. The drum 1 is constructed so as to allow the filling by pressurised air of the carcass 5 from the circumferential surface thereof at a given pressure (e.g. 0.5 to 1.5kg/cm²).

Arranged around the drum 1, there are first and second pairs of stitch roller members 2 and 3 arranged spaced apart in the circumferential direction of the drum. The pairs of stitch roller members 2 and 3 are positioned adjacent to each other in the circumferential direction of the drum 1. The first pair of stitch roller members 2 comprises left and right roller elements 2a and 2b spaced apart in a direction parallel to the rotatable shaft O of the drum 1. Likewise, the second pair of stitch roller members 3 comprises left and right roller elements 3a and 3b spaced apart in a direction parallel to the rotatable shaft O.

As shown in Fig. 2, each pair of roller elements 2a,3a and 2b,3b are positioned so that the tread centre line R is between them and are arranged in line on circumferentially extending lines CL, CR parallel to the tread centre line R. In other words, the left roller elements 2a and 3a are arranged on the line CL, whereas the right roller elements 2b and 3b are arranged on the line CR.

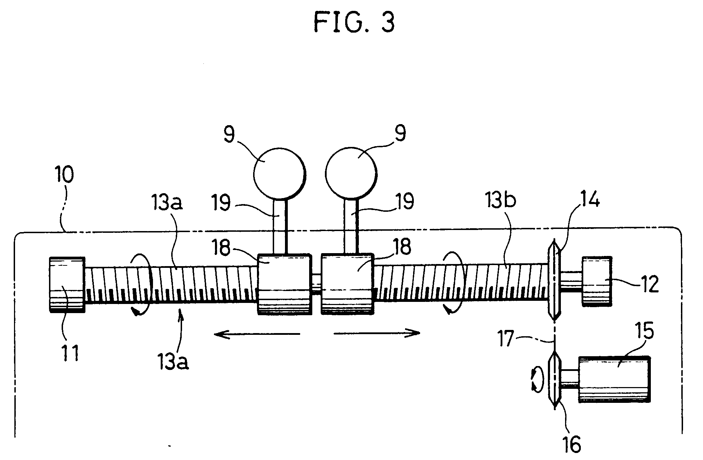

Now will be described a pressing mechanism and a widening mechanism which support the roller elements 2a,3a and 2b,3b with reference to Figs. 1 and 3.

A housing 10 for accommodating the widening mechanism is mounted on the building machine base and a pair of fluid cylinders 9 are provided above the housing 10. These fluid cylinders 9 are horizontal and arranged perpendicular to the drum shaft O, and a rod 9a extends from each cylinder 9 so as to be radial to and opposed to the drum 1. The direction of arranging these fluid cylinders 9 is in parallel with the drum rotatable shaft O. At a leading end of each rod 9a is fixed a plate-like support member 8 lying in a vertical plane. The roller elements 2a and 3a located on the left side of the tread centre line R are rotatably mounted at upper and lower portions of the left support member 8 by bearings or the like. Likewise, the roller elements 2b, 3b located on the right side are rotatably mounted at upper and lower portions of the right support member 8 by bearings or the like.

Each pair of roller elements 2a,3a and 2b,3b are arranged such that the tangent line A to the respective stitch roller members 2 and 3 is normal to a horizontal line B passing through the rotatable shaft O of the drum 1 and the rotatable shafts of the stitch roller members 2 and 3 are located substantially symmetrically with respect to the horizontal line B when viewed from the front as shown in Fig. 1. The respective rods 9a are arranged such that the centre axes thereof are located on the horizontal line B when viewed from the front. In other words, the rods 9a extend in a direction normal to the drum rotatable shaft O.

As shown in Fig. 3, a screw shaft 13 is rotatably mounted in bearings 11, 12 in the housing 10. This screw shaft 13 extends parallel to the drum rotatable shaft O, and has a threaded portion 13a formed on an outer circumferential surface of a left half thereof while having a threaded portion 13b whose thread extends spirally in the direction opposite to the screw portion 13a formed on an outer circumferential surface of a right half thereof. A sprocket 14 is fixed at a right end of the screw shaft 13. Below the screw shaft 13 is provided a motor 15 for driving the widening mechanism. On an output shaft of the motor 15 is fixed a sprocket 16, which is coupled with the sprocket 14 by a chain 17.

A nut 18 is externally fitted to each of the threaded portions 13a, 13b of the screw shaft 13. A cylinder support member 19 extends upward from each nut 18 up to a position above the top surface of the housing 1, and the fluid cylinder 9 is fixed at an upper end of each cylinder support member 19.

Accordingly, when the left and right fluid cylinders 9 are elongated further, the support members 8 fixed at the rods 9a of the fluid cylinders 9 and the roller elements 2a, 3a and 2b,3b supported by each of the support members 8 move integrally in pairs towards the outer circumferential surface of the tread 7, thereby pressing the roller elements 2a,3a and 2b,3b against this outer circumferential surface. In addition, the motor 15 is driven in the specified direction, and the driving force thereof is transmitted to the screw shaft 13 through the sprockets 16, 14 and the chain 17. According to the rotation of the threaded shaft 13, the group of the nut 18, fluid cylinder 9, support member 8, and roller elements 2a,3a located at the left side and the other group of the nut 18, fluid cylinder 9, support member 8, and roller elements 2b, 3b located at the right side move away from each other. In this way, the roller elements 2a,3a and 2b,3b are spaced apart from each other from the centre of the outer circumferential surface of the tread 7 to opposite ends thereof.

The diameter D of the roller elements 2a, 3a and 2b,3b is desirably about 50mm to 100mm for a tyre of the normal car size is fabricated.

Further, the spacing L in the circumferential direction between the corresponding roller elements 2a and 3a and 2b and 3b is desirably set in the range of 0 < L ≦ 1/4D, i.e. the spacing L is desirably set at an exceedingly small value. In other words, it is desirable to position the stitch roller members 2, 3 at positions spaced apart but as close to each other as possible.

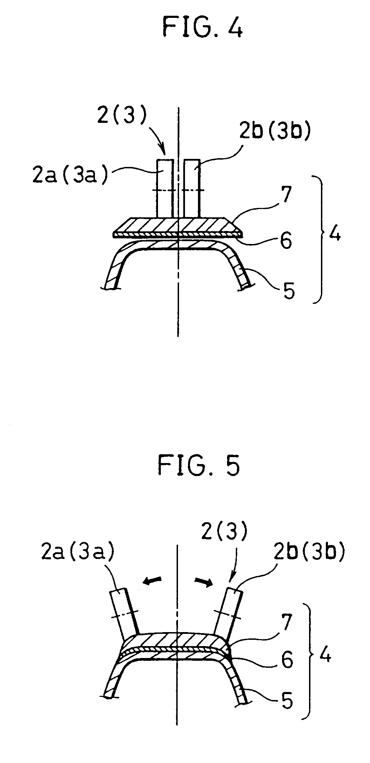

There will be next described the sequence of stitching processes for the carcass 5, the breaker 6, and the tread 7 carried out utilising this apparatus as follows:
(a) The carcass 5 is mounted on the outer circumferential surface of the drum 1 as shown in Fig. 1, and air is pumped into the carcass 5 to the specified pressure, thereby inflating the carcass 5. Then the tread 7 is rolled on to the outer circumferential surface of the carcass 5 over the breaker 6. That is to say, the complete component assembly 4 is mounted on the drum 1.
(b) The motor M is driven in the forward or reverse direction, thereby causing the drum 1 to rotate about its rotatable shaft O. At this time, the component assembly 4 rotates together with the drum 1.
(c) The left and right fluid cylinders 9 are expanded while the drum 1 is rotating with the left and right nuts 18 and thus the fluid cylinders 9 located at the centre as shown in Fig. 3. This causes the roller elements 2a,3a and 2b,3b supported by the left and right support members 8 to be pressed against the centre portion of the outer circumferential surface of the tread 7 as shown in Figs. 2 and 4. At this time, the left and right roller elements 2a,2b of the first stitch roller member 2 and the left and right roller elements 3a,3b of the second stitch roller member 3 are pressed against the outer circumferential surface of the tread 7 in positions shifted in the circumferential direction (upper and lower positions in the illustrated example).
(d) While the roller elements 2a,3a and 2b,3b are pressed against the outer circumferential surface of the tread 7, the motor 15 is driven to move the left and the right nuts and fluid cylinders 9 away from each other. Thereby, the left roller elements 2a,3a and the right roller elements 2b, 3b move towards the left and right edges of the outer circumferential surface from the tread centre line R. In other words, the roller elements 2a,3a and 2b,3b are moved continuously and simultaneously from the centre portion of the outer circumferential surface of the tread 7 to the opposite edges thereof as shown in Fig. 5 while being pressed against the outer circumferential surface of the tread 7. By the aforementioned operations, the carcass 5, the breaker 6, and the tread 7 are adhered to one another from the centre portion to the opposite edges thereof.
(e) After the stitching operation, the stitch roller members 2a,3a and 2b,3b are moved back by shortening the cylinders 9 and a next component assembly 4 is mounted on the drum 1. The stitching operation is applied to this next component assembly 4 in the same way as above.

With the method and apparatus as described above, the first and second stitch roller members 2, 3 are pressed against the outer circumferential surface of the tread 7 at positions shifted circumferentially to each other. Accordingly, a sufficient pressing force can be applied to the outer circumferential surface of the tread 7 as a whole without increasing the pressing force of the individual stitch roller members. Thus, a satisfactory stitching operation can be carried out while avoiding deformation of the component assembly and slip at the turned-up portion of the carcass ply due to excessive pressing. Further, there can be obtained an adhering effect substantially similar to the one obtained when the pressing time is extended twice as long by arranging the stitch roller members 2 and 3 circumferentially spaced but close together. Thus, sufficient stitching operation can be carried out in a shorter period of time than the prior art, thereby making a great progress in productivity.

Particularly in this embodiment, since the first and second stitch roller members 2 and 3 are positioned circumferentially adjacent to each other, the stitching operation can be carried out advantageously as follows, for example, when the drum 1 is drivingly rotated clockwise in the drawing of Fig. 1. First of all, the outer circumference of the tread 7 is pressed by the first stitch roller member 2 once, thereby adhering the carcass 5, the breaker 6, and the tread 7 to one another to some degree. Thereafter, the outer circumferential surface of the tread 7 is pressed by the second stitch roller member 3 before the first obtained adhesion is loosened due to centrifugal force generated by the rotation of the component assembly 4 and the restoring force of the tread 7 as a rigid body. Accordingly, a higher adhering effect can be obtained compared to the case where the stitch roller members 2, 3 are arranged distant from each other.

Since the stitch roller members 2, 3 are arranged adjacent to each other, the roller elements located at the same side (i.e., the left roller elements and the right roller elements) can be supported by a single support member 8 and can be pressed against the outer circumferential surface of the tread 7 using a single fluid cylinder. Thus, the number of parts constituting the tyre fabricating apparatus can be reduced, and the widening mechanism for widening the spacing between the left and right roller elements can be simplified in construction compared to a tyre fabricating apparatus in which the roller elements are driven independently.

Even if the stitch roller members 2, 3 are not arranged adjacent to each other, it is possible to reduce the pressing force of the stitch roller members 2, 3 compared to the prior art by pressing the members 2, 3 against the outer circumferential surface of the tread 7 simultaneously at positions shifted circumferentially to each other.

It may be appropriate to provide additionally a third stitch roller member and a fourth stitch roller member, ... at positions different from the first and second stitch rollers.

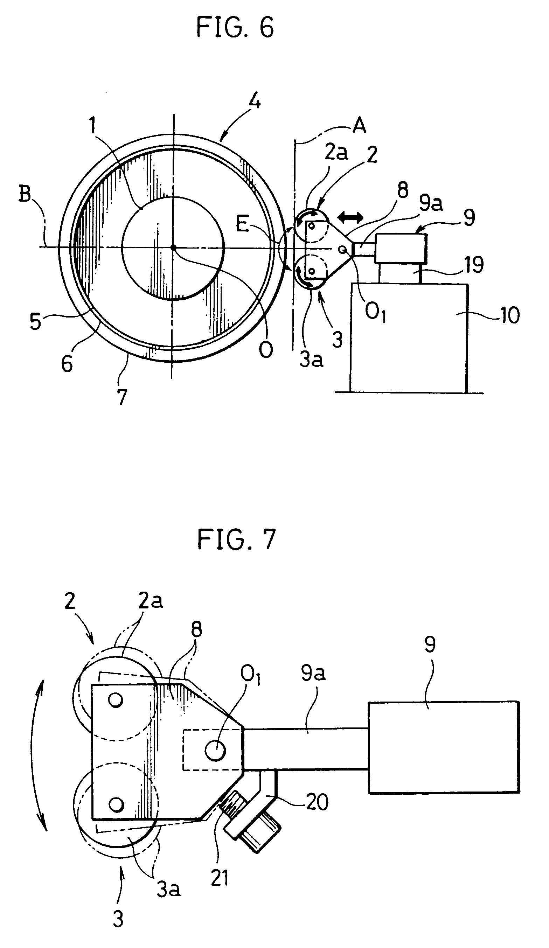

Next will be described a second embodiment with reference to Figs. 6 and 7.

In this embodiment, a support member 8 is rotatably coupled to a rod 9a of each fluid cylinder 9 by a pin or shaft O1 parallel to the rotatable shaft O of the drum 1. The positions of the roller elements 2a,3a may then vary angularly relative to the corresponding rod 9a according to rotation of this support member 8 (as indicated by the phantom line in Fig. 7). There is also provided a support piece 20 which extends toward the support member 8. A stopper (angle holding member) 21 projecting towards the support member 8 is fixed at an end of a support piece 20. The support member 8 contacts this stopper 21 when the roller elements 2a,3a and 2b,3b are not in contact with the outer circumferential surface of the tread 7, thereby being prevented from falling downwards due to the weight of the support member 8 and the roller elements 2a,3a and 2b,3b. In this way, the stopper 21 holds the support member 8 in a substantially horizontal position as illustrated.

With the apparatus thus constructed, even if the extending direction of the rod 9a does not coincide precisely with the direction normal to the drum rotatable shaft O (i.e., the rod 9a is inclined with respect to the direction normal to the drum rotatable shaft O), the support member 8 and the roller elements 2a,3a and 2b,3b are free to rotate relative to the rod 9a according to this inclination. Therefore, all the roller elements 2a,3a and 2b,3b can be pressed against the outer circumferential surface of the tread 7 constantly and reliably.

Further in this apparatus, the stopper 21 is provided to restrict the downward rotation of the support member 8 when the roller elements 2a,3a and 2b,3b are not in contact with the outer circumferential surface of the tread 7. Accordingly, the roller elements 2a,3a and 2b,3b can be pressed against the outer circumferential surface of the tread smoothly merely by elongating the fluid cylinders 9.

As an angle holding member for maintaining an angle of rotation of the support member 8 in a specified range, a spring may be provided between the support member 8 and the rod 9a instead of the stopper 21. The support member 8 may be held in a suitable position by the force of the spring but may be rotated against this force when necessary.

There will be described a third embodiment next with reference to Fig. 8.

In this embodiment, a second stitch roller member 3 projects forwards more than a first stitch roller member 2 in the apparatus of the first embodiment. With this arrangement, the first stitch roller member 2 is pressed against the outer circumferential surface of a tread 7 with a weaker force than the second stitch roller member 3 in a state when fluid cylinder 9 is elongated.

With this apparatus, the drum 1 and the component assembly 4 are rotated clockwise in Fig. 8, and the outer circumferential surface of the tread 7 is first pressed with a lower force by the first stitch roller member 2, and is pressed by a higher force by the second stitch roller member 3 immediately thereafter. Thus, the stitching operation can be carried out effectively while preventing an occurrence where the strong force is applied to the outer circumferential surface of the tread 7 abruptly to thereby deform the component assembly.

As a means for applying the different pressing forces, the roller elements 2a,3a and 2b,3b may be mounted on the support member 8 at horizontally shifted positions in advance. Alternatively, it may be appropriate to adjust the projected amounts of the roller elements 2a,3a and 2b,3b by rotating the support member 8 about the shaft O1 in the construction shown in the second embodiment, and then to fix the support members 8 on the rods 9a. In the case where the first and second stitch roller members 2, 3 are supported by separate pressing mechanisms, the pressing forces generated by the pressing mechanisms may be set individually to thereby differ the pressing forces of the stitch roller members 2, 3 from each other.

In the third embodiment, the pressing force of the first stitch roller member 2 is weaker than that of the second stitch roller member 3. However, when the pressing force of the second stitch roller member 3 is set weaker than that of the first stitch roller member 2, the effect similar to the above can be obtained if the drum 1 is rotated counterclockwise in the drawing of Fig. 8.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. A tyre fabricating method for an annular carcass (5), a breaker (6) and a tread (7) over the carcass (5), on an outer circumferential surface of a drum (1), comprising pressing the carcass (5), breaker (6), and tread (7) radially inwards of the drum (1) to thereby adhere them one to another, by pressing first and second stitch roller members (2,3) each of which comprises left and right spaced apart roller elements (2a,3a and 2b,3b), arranged parallel to a rotatable shaft (O) of the drum (1), against the outer circumferential surface of the tread (7) at positions spaced apart relatively to each other in the circumferential direction of the tread (7) while rotating the carcass (5), breaker (6), and tread (7) together on the drum (1) and, then at the same time, the roller elements (2a,3a and 2b,3b) are moved away from each other from a centre portion of the outer circumferential surface of the tread (7) to opposite edges thereof so as to widen the spacing between the roller elements (2a,3a and 2b,3b), characterised in that the left roller elements (2a,3a) of the first and second roller member (2,3) are arranged in a circumferential line on a left side of the centre portion of the tread and the right roller elements (2b,3b) of the first and second roller member (2,3) are arranged in a circumferential line on a right side of the centre portion of the tread.

2. A tyre fabricating method according to claim 1 characterised in that the first and second stitch roller members (2,3) are pressed against the outer circumferential surface of the tread (7) at positions adjacent to each other in the circumferential direction (R) of the tread (7).

3. A tyre fabricating method according to claim 1 characterised in that the second stitch roller member (3) is pressed against the outer circumferential surface of the tread (7) at a more downstream position with respect to the rotating direction of the drum (1) and at a stronger force than the first stitch roller member (2).

4. A tyre fabricating apparatus for an annular carcass (5), a breaker (6) and a tread (7) over the carcass, to adhere the same to one another, the apparatus comprising a drum (1), drive means (M) for rotating the drum (1) a first stitch roller member (2) including a pair of roller elements (2a,2b) arranged spaced apart parallel to a rotatable shaft (O) of the drum (1), a second stitch roller member (3) including a pair of roller elements (3a,3b) arranged spaced apart parallel to the rotatable shaft (O) of the drum (1) at a position shifted from the first stitch roller member in the circumferential direction (R) of the tread (7), pressing means for rotatably supporting and pressing the first and second stitch roller members (2,3) against the outer circumferential surface of the tread (7), and widening means for moving the roller elements (2a,3a and 2b,3b) of each stitch roller member (2 and 3) respectively away from each other from a centre portion of the outer circumferential surface of the tread (7) to opposite edges thereof so as to widen the spacing between the roller elements (2a,3a and 2b,3b), characterised in that one roller element (2a,3a) of each of the first and second roller members (2,3) is arranged in a circumferential line on one side of the centre portion of the tread and the other roller element (2b,3b) of each of the first and second roller members (2,3) is arranged in a circumferential line on the other side of the centre portion of the tread.

5. A tyre fabricating apparatus according to claim 4 characterised in that the first and second stitch roller members (2 and 3) are pressed against the outer circumferential surface of the tread (7) at positions adjacent to each other in the circumferential direction of the tread (7).

6. A tyre fabricating apparatus according to claim 5 characterised in that the roller elements (2a,3a and 2b,3b) of the first and second stitch roller members located at the same side defined by the centre portion of the outer circumferential surface of the tread (7) are supported by a common pressing means (8).

7. A tyre fabricating apparatus according to claim 5 or 6 characterised in that the second stitch roller member (3) is located at a more downstream position with respect to the rotating direction of the drum than the first stitch roller member (2), and wherein the pressing means is constructed such that the pressing force given from the first stitch roller member (2) is weaker than the pressing force given from the second stitch roller member (3).

8. A tyre fabricating apparatus according to claim 6 characterised in that the pressing means includes a support member (8) for rotatably supporting the roller elements of the first and second stitch roller members (2a,3a or 2b,3b) located at the same side defined by the centre portion of the outer circumferential surface of the tread and where these roller elements (2a,3a and 2b,3b) are arranged side by side in the circumferential direction of the tread (7), and a pressing member for moving the support members (8) and the roller elements supported by each support member (8) together towards the outer circumferential surface of the tread (7) in an inward radial direction of the tread, the support member (8) being rotatably coupled to the pressing member about an axis parallel with the rotatable shaft (O) of the drum.

9. A tyre fabricating apparatus according to claim 8 characterised in that the pressing member is provided with an angle holding member for holding an angle of rotation of the support member (21) so that the corresponding roller elements (2a,3a or 2b,3b) are located opposed to the outer circumferential surface of the tread in the state where these roller elements are not in contact with the outer circumferential surface of the tread.

## Patentansprüche

1. Ein Reifenherstellungsverfahren für eine ringförmige Karkasse (5), einen Breaker (6) und eine Lauffläche (7) über der Karkasse (5), auf einer äußeren Umfangsoberfläche einer Trommel (1), mit den Schritten, daß die Karkasse (5), Breaker (6) und Lauffläche (7) radial einwärts der Trommel (1) gepreßt werden, um sie dadurch eine auf die andere zu heften, indem erste und zweite Heftwalzenglieder (2, 3), von welchen jedes linke und rechte auseinander beabstandete Walzenelemente (2a, 3a und 2b, 3b) umfaßt, die parallel zu einer drehbaren Welle (O) der Trommel (1) angeordnet sind, gegen die äußere Umfangsoberfläche der Lauffläche (7) bei Positionen gepreßt werden, die relativ zueinander in der Umfangsrichtung der Lauffläche (7) beabstandet sind, während die Karkasse (5), der Breaker (6) und die Lauffläche (7) zusammen auf der Trommel (1) gedreht werden, und dann zur gleichen Zeit die Walzenelemente (2a, 3a und 2b, 3b) voneinander weg von einem Mittelteil der äußeren Umfangsoberfläche der Lauffläche (7) zu entgegengesetzten Rändern davon bewegt werden, um so die Beabstandung zwischen den Walzenelementen (2a, 3a und 2b, 3b) zu erweitern, dadurch gekennzeichnet, daß die linken Walzenelemente (2a, 3a) des ersten und zweiten Walzengliedes (2, 3) in einer Umfangslinie auf einer linken Seite des Mittelteils der Lauffläche angeordnet werden, und die rechten Walzenelemente (2b, 3b) der ersten und zweiten Walzenglieder (2, 3) in einer Umfangslinie auf einer rechten Seite des Mittelteils der Lauffläche angeordnet werden.

2. Ein Reifenherstellverfahren nach Anspruch 1, dadurch gekennzeichnet, daß die ersten und zweiten Heft-Walzenglieder (2, 3) gegen die äußere Umfangsoberfläche der Lauffläche (7) bei Positionen benachbart zueinander in der Umfangsrichtung (R) der Lauffläche (7) angeordnet sind.

3. Ein Reifenherstellverfahren nach Anspruch 1, dadurch gekennzeichnet, daß das zweite Heftwalzenglied (3) gegen die äußere Umfangsoberfläche der Lauffläche (7) bei einer stromabwärtigeren Position mit Bezug auf die Drehrichtung der Trommel (1) und mit einer stärkeren Kraft als das erste Heftwalzenglied (2) gepreßt wird.

4. Eine Reifenherstellvorrichtung für eine ringförmige Karkasse (5), einen Breaker (6) und eine Lauffläche (7) über der Karkasse, um dieselben aneinanderzuheften, wobei die Vorrichtung aufweist eine Trommel (1), ein Antriebsmittel (M) zum Drehen der Trommel (1), ein erstes Heftwalzenglied (2) mit einem Paar von Walzenelementen (2a, 2b), die parallel zu einer drehbaren Welle (O) der Trommel (1) auseinander beabstandet angeordnet sind, einem zweiten Heftwalzenglied (3) mit einem Paar von Walzenelementen (3a, 3b), die parallel zu der drehbaren Welle (O) der Trommel (1) bei einer Position auseinander beabstandet angeordnet sind, die von dem ersten Heftwalzenglied in der Umfangsrichtung (R) der Lauffläche (7) verschoben ist, ein Preßmittel zum drehbaren Tragen und Pressen der ersten und zweiten Heftwalzenglieder (2, 3) gegen die äußere Umfangsoberfläche der Lauffläche (7), und ein Erweiterungsmittel zum Bewegen der Walzenelemente (2a, 3a und 2b, 3b) von jedem Heftwalzenglied (2 und 3) respektive weg voneinander von einem Mittelteil der äußeren Umfangsoberfläche der Lauffläche (7) zu entgegengesetzten Rändern davon, um so die Beabstandung zwischen den Walzenelementen (2a, 3a und 2b, 3b) zu erweitern, dadurch gekennzeichnet, daß ein Walzenelement (2a, 3a) von jedem der ersten und zweiten Walzenglieder (2, 3) in einer Umfangslinie auf einer Seite des Mittelteils der Lauffläche angeordnet ist, und das andere Walzenelement (2b, 3b) von jedem der ersten und zweiten Walzenglieder (2, 3) in einer Umfangslinie auf der anderen Seite des Mittelteils der Lauffläche angeordnet ist.

5. Eine Reifenherstellvorrichtung nach Anspruch 4, dadurch gekennzeichnet, daß die ersten und zweiten Heftwalzenglieder (2 und 3) gegen die äußere Umfangsoberfläche der Lauffläche (7) bei Positionen benachbart zueinander in der Umfangsrichtung der Lauffläche (7) gepreßt sind.

6. Eine Reifenherstellvorrichtung nach Anspruch 5, dadurch gekennzeichnet, daß die Walzenelemente (2a, 3a und 2b, 3b) der ersten und zweiten Heftwalzenglieder, die bei der gleichen Seite angeordnet sind, die durch den Mittelteil der äußeren Umfangsoberfläche der Lauffläche (7) definiert ist, durch ein gemeinsames Preßmittel (8) getragen sind.

7. Eine Reifenherstellvorrichtung nach Anspruch 5 oder 6, dadurch gekennzeichnet, daß das zweite Heftwalzenglied (3) bei einer stromabwärtigeren Position mit Bezug auf die Drehrichtung der Trommel als das erste Heftwalzenglied (2) angeordnet ist, und worin das Preßmittel derart aufgebaut ist, daß die Preßkraft, die von dem ersten Heftwalzenglied (2) gegeben ist, schwächer als die Preßkraft ist, die von dem zweiten Heftwalzenglied (3) gegeben ist.

8. Eine Reifenherstellvorrichtung nach Anspruch 6, dadurch gekennzeichnet, daß das Preßmittel ein Trägerglied (8) zum drehbaren Tragen der Walzenelemente der ersten und zweiten Heftwalzenglieder (2a, 3a oder 2b, 3b) umfaßt, die auf der gleichen Seite angeordnet sind, die durch den Mittelteil der äußeren Umfangsoberfläche der Lauffläche definiert sind, und wobei diese Walzenelemente (2a, 3a und 2b, 3b) Seite an Seite in der Umfangsrichtung der Lauffläche (7) angeordnet sind, und ein Preßglied zum Bewegen der Trägerglieder (8) und der Walzenelemente, die von jedem Trägerglied (8) getragen sind, zusammen in Richtung auf die äußere Umfangsoberfläche der Lauffläche (7) in einer Einwärtsradialrichtung der Lauffläche, wobei das Trägerglied (8) an das Preßglied um eine Achse parallel zu der drehbaren Welle (O) der Trommel drehbar gekoppelt ist.

9. Eine Reifenherstellvorrichtung nach Anspruch 8, dadurch gekennzeichnet, daß das Preßglied mit einem Winkelhalteglied zum Halten eines Winkels der Drehung des Trägergliedes (21) vorgesehen ist, so daß die entsprechenden Walzenelemente (2a, 3a oder 2b, 3b) entgegengesetzt zu der äußeren Umfangsoberfläche der Lauffläche in dem Zustand angeordnet sind, wo diese Walzenelemente nicht in Kontakt mit der äußeren Umfangsoberfläche der Lauffläche stehen.

## Revendications

1. Procédé de fabrication de pneumatique avec une carcasse annulaire (5), une nappe sommet (6) et une bande de roulement (7) placées sur la carcasse (5), à une surface circonférentielle externe d'un tambour (1), le procédé comprenant l'application d'une pression à la carcasse (5), à la nappe sommet (6) et à la bande de roulement (7) en direction radiale vers l'intérieur du tambour (1) afin que ces éléments adhèrent les uns aux autres, par application d'une pression à un premier et un second organe (2, 3) à rouleaux de piqûre comprenant chacun des éléments distants gauche et droit de rouleau (2a, 3a et 3a, 3b) placés parallèlement à l'arbre rotatif (O) du tambour (1), contre la surface circonférentielle externe de la bande de roulement (7) à des positions distantes l'une de l'autre dans la direction circonférentielle de la bande de roulement (7) avec entraînement en rotation de la carcasse (5), de la nappe sommet (6) et de la bande de roulement (7) ensemble sur le tambour (1) alors qu'en même temps, les éléments (2a, 3a et 2b, 3b) de rouleau sont écartés l'un de l'autre depuis une partie centrale de la surface circonférentielle externe de la bande de roulement (7) vers les bords opposés de celle-ci afin que l'espace compris entre les éléments de rouleau (2a, 3a et 2b, 3b) soit élargi, caractérisé en ce que les éléments gauches (2a, 3a) de rouleau du premier et du second organe (2, 3) à rouleaux sont placés sur un axe circonférentiel à gauche de la partie centrale de la bande de roulement et les éléments droits (2b, 3b) de rouleau du premier et du second organe (2, 3) à rouleaux sont placés sur un axe circonférentiel du côté droit de la partie centrale de la bande de roulement.

2. Procédé de fabrication de pneumatique selon la revendication 1, caractérisé en ce que le premier et le second organe (2, 3) à rouleaux de piqûre sont repoussés par pression contre la surface circonférentielle externe de la bande de roulement (7) à des positions adjacentes l'une à l'autre dans la direction circonférentielle (R) de la bande de roulement (7).

3. Procédé de fabrication de pneumatique selon la revendication 1, caractérisé en ce que le second organe (3) à rouleaux de piqûre est repoussé par pression contre la surface circonférentielle externe de la bande de roulement (7) dans une position qui est plus en aval, compte tenu du sens de rotation du tambour (1), et avec une force plus grande que celles du premier organe (2) à rouleaux de piqûre.

4. Appareil de fabrication de pneumatique comprenant une carcasse annulaire (5), une nappe sommet (6) et une bande de roulement (7) placées sur la carcasse afin que ces éléments adhérent les uns aux autres, l'appareil comprenant un tambour (1), un dispositif (M) d'entraînement du tambour (1), un premier organe (2) à rouleaux de piqûre comprenant deux éléments (2a, 2b) de rouleau espacés parallèlement à l'arbre rotatif (O) du tambour (1), un second organe (3) à rouleaux de piqûre comprenant deux éléments (3a, 3b) de rouleau espacés parallèlement à l'arbre rotatif (O) du tambour (1) en position décalée par rapport au premier organe à rouleaux de piqûre dans la direction circonférentielle (R) de la bande de roulement (7), un dispositif de pression destiné à supporter le premier et le second organe (2, 3) à rouleaux de piqûre afin qu'ils puissent tourner et à les repousser sous pression contre la surface circonférentielle externe de la bande de roulement (7), et un dispositif d'élargissement destiné à déplacer les éléments (2a, 3a et 2b, 3b) de rouleau de chaque organe (2 et 3) à rouleaux de piqûre afin qu'ils s'écartement mutuellement d'une position centrale de la surface circonférentielle externe de la bande de roulement (7) vers les bords opposés de celle-ci et que la distance comprise entre les éléments (2a, 3a et 2b, 3b) de rouleau s'agrandisse, caractérisé en ce qu'un élément de rouleau (2a, 3a) de chacun des premier et second organes (2, 3) à rouleaux est placé sur un axe circonférentiel d'un côté de la partie centrale de la bande de roulement et l'autre élément de rouleau (2b, 3b) de chacun des premier et second organes (2, 3) à rouleaux est placé sur un axe circonférentiel qui se trouve de l'autre côté de la partie centrale de la bande de roulement.

5. Appareil de fabrication de pneumatique selon la revendication 4, caractérisé en ce que le premier et le second organe (2 et 3) à rouleaux de piqûre sont repoussés par pression contre la surface circonférentielle externe de la bande de roulement (7) à des positions adjacentes mutuellement dans la direction circonférentielle de la bande de roulement (7).

6. Appareil de fabrication de pneumatique selon la revendication 5, caractérisé en ce que les éléments de rouleau (2a, 3a et 2b, 3b) du premier et du second organe à rouleaux de piqûre placés du même côté par rapport à la partie centrale de la surface circonférentielle externe de la bande de roulement (7), sont supportés par un dispositif commun de pression (8).

7. Appareil de fabrication de pneumatique selon la revendication 5 ou 6, caractérisé en ce que le second organe (3) à rouleaux de piqûre est placé à une position plus en aval, compte tenu du sens de rotation du tambour, que le premier organe (2) à rouleaux de piqûre, et le dispositif de pression a une construction telle que la force de pression appliquée par le premier organe (2) à rouleaux de piqûre est plus faible que la force de pression appliquée par le second organe (3) à rouleaux de piqûre.

8. Appareil de fabrication de pneumatique selon la revendication 6, caractérisé en ce que le dispositif de pression comporte un organe de support (8) destiné à supporter des éléments de rouleau du premier et du second organe (2a, 3a ou 2b, 3b) à rouleaux de piqûre afin qu'ils puissent tourner, placé du même côté par rapport à la partie centrale de la surface circonférentielle externe de la bande de roulement, et ces éléments de rouleau (2a, 3a et 2b, 3b) sont placés côte à côte dans la direction circonférentielle de la bande de roulement (7), et un organe de pression destiné à déplacer les organes de support (8) et les éléments de rouleau supportés par chaque organe de support (8) ensemble vers la surface circonférentielle externe de la bande de roulement (7) en direction radiale vers l'intérieur de la bande de roulement, l'organe de support (8) étant couplé à l'organe de pression afin qu'il puisse tourner autour d'un axe parallèle à l'arbre de rotation (O) du tambour.

9. Appareil de fabrication de pneumatique selon la revendication 8, caractérisé en ce que l'organe de pression possède un organe de maintien d'angle destiné à maintenir l'angle de rocation de l'organe (21) de support de manière que les éléments correspondants de rouleau (2a, 3a ou 2b, 3b) soient en face de la surface circonférentielle externe de la bande de roulement dans l'état dans lequel les éléments de rouleau ne sont pas au contact de la surface circonférentielle externe de la bande de roulement.
